# EUROPEAN PATENT SPECIFICATION

(11) **EP 4 214 914 B1**
(45) Date of publication and mention of the grant of the patent: **10.07.2024**
(21) Application number: 20776251.9
(22) Date of filing: 16.09.2020
(51) Int. Cl.: H04L 47/34, H04L 45/50, H04L 47/41

(54) **FIRST NODE, SECOND NODE, AND METHODS PERFORMED THEREBY FOR CONFIGURING HANDLING OF TWO OR MORE INGRESS MEMBER FLOWS**
ERSTER KNOTEN, ZWEITER KNOTEN UND DAVON DURCHGEFÜHRTE VERFAHREN ZUR KONFIGURATION DER HANDHABUNG VON ZWEI ODER MEHR EINGANGSELEMENTSTRÖMEN
PREMIER NOEUD, SECOND NOEUD, ET PROCÉDÉS EXÉCUTÉS PAR CEUX-CI POUR CONFIGURER LA GESTION DE DEUX FLUX D'ÉLÉMENTS D'ENTRÉE OU PLUS

(43) Date of publication of application: 26.07.2023
(73) Proprietor: Telefonaktiebolaget LM Ericsson (publ), 164 83 Stockholm (SE)
(72) Inventor: VARGA, Balázs, 1162 Budapest (HU); FARKAS, János, 6000 Kecskemét (HU); MIKLÓS, György, 2097 Pilisborosjenö (HU)
(74) Representative: Ericsson
(86) International application number: PCT/SE2020/050865
(87) International publication number: WO 2022/060262

(56) References cited:
- KORHONEN J ET AL: "DetNet MPLS Data Plane Encapsulation; draft-ietf-detnet-dp-sol-mpls-02.txt", no. 2, 10 March 2019 (2019-03-10), pages 1 - 53, XP015131648, Retrieved from the Internet <URL:https://tools.ietf.org/html/draft-ietf-detnet-dp-sol-mpls-02> [retrieved on 20190310]
- FINN HUAWEI P THUBERT CISCO B VARGA J FARKAS ERICSSON N: "Deterministic Networking Architecture; draft-ietf-detnet-architecture-06.txt", DETERMINISTIC NETWORKING ARCHITECTURE; DRAFT-IETF-DETNET-ARCHITECTURE-06.TXT; INTERNET-DRAFT: DETNET, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 6, 29 June 2018 (2018-06-29), pages 1 - 40, XP015127195

## Description

### TECHNICAL FIELD

The present disclosure relates generally to a first node and methods performed thereby for configuring a second node to handle two or more ingress member flows split from a flow of packets. The present disclosure also relates generally to a second node, and methods performed thereby for handling two or more ingress member flows split from a flow of packets. The present disclosure further also relates generally to computer programs and computer-readable storage mediums, having stored thereon the computer programs to carry out these methods.

### BACKGROUND

Computer systems in a communications network may comprise one or more nodes. A node may comprise one or more processors which, together with computer program code may perform different functions and actions, a memory, a receiving and a sending port. A node may be, for example, a router.

Standard Information Technology infrastructure may not be able to handle extreme latency-sensitive data with a required level of efficiency. Switches and routers may process packets and/or flows in such a way that data flow may be sporadic. Deterministic Networking (DetNet) is an effort by the IETF DetNet Working Group to study providing support for real-time applications by implementing reservation of data plane resources in intermediate nodes along a data flow path, calculation of explicit routes which may be independent, and redistribution of data packets over time and/or space to deliver data even with the loss of one path. Deterministic data paths may be understood to aim to support real-time applications, such as audio and video streaming, industrial automation, and vehicle control, by guaranteeing extremely low data loss rates, packet delay variation (jitter), and bounded latency.

In IETF, the DetNet Working Group focuses on deterministic data paths that may operate over Layer 2 bridged and Layer 3 routed segments, where such paths may provide bounds on latency, loss, and packet delay variation, that is, jitter, and high reliability. The Working Group addresses Layer 3 methods in support of applications requiring deterministic networking. DetNet may be understood to focus on aspects which may be required to enable a multi-hop path, and forwarding along the path, with the deterministic properties of controlled latency, low packet loss, low packet delay variation, and high reliability.

Layer 3 data plane technologies that may be used in DetNet networks may include: the Internet Protocol (IP) and Multi-protocol label switching (MPLS).

Multiprotocol Label Switching (MPLS) may be understood as a routing technique in telecommunications networks that may enable to direct data from one node to the next based on short path labels rather than long network addresses, thereby enabling to speed up traffic flows. The labels may be understood to identify virtual links (paths) between distant nodes rather than endpoints. As denoted by the term "multiprotocol" in its name, MPLS may encapsulate packets of various network protocols. MPLS encapsulation may be understood to already provide a solid foundation of building blocks to enable the DetNet service and forwarding sub-layer functions. The DetNet MPLS data plane may be, for example, as described in https://tools.ietf.org/html/draft-ietf-detnet-mpls-09.

In Deterministic Networking, a flow may be understood as a sequence of packets that may conform uniquely to a flow identifier and to which a DetNet service may be to be provided. A DetNet service may require two parameters associated with each packet of a DetNet flow: a DetNet Flow identifier, which may identify the DetNet flow a packet may belong to, and a sequence number, which may allow the recognition of packet duplicates and the order of packets in a DetNet Flow. When routed between different nodes in a network, flows may be understood to be encapsulated. Encapsulation may be understood to enable proper forwarding behavior across an MPLS network. The DetNet MPLS data plane encapsulation may contain an identifying service label (S-Label) and a DetNet control word (d-CW). The S-Label may be understood to represent the DetNet Flow identifier, whereas the d-CW may be understood to contain the sequence number of the packet.

In order to achieve extreme low packet loss, the IETF DetNet Work Group has specified the Packet Replication, Elimination, and Ordering Functions (PREOF), as for example described in section 3.2.2.2 in RFC8655 "Deterministic Networking Architecture". PREOF may be understood to be targeted to avoid packet loss due to equipment failure. PREOF may be practically understood as a per-packet 1+1 (or 1+n) redundancy function. According to PREOF, a DetNet Flow may be divided into one or more linked member flows, thus making the original flow, a compound flow. A DetNet compound flow may be understood as a DetNet flow that may have been separated into multiple duplicate DetNet member flows for service protection at the DetNet service sub-layer. Member flows may be merged back into a single DetNet compound flow such that there may be no duplicate packets. "Compound" and "member" may be understood to be strictly relative to each other, not absolutes; a DetNet compound flow comprising multiple DetNet member flows may, in turn, be a member of a higher-order compound.

Replication and Elimination functions and their enhancements may be understood to provide redundancy support. Instead of relying on failure detection and/or switchover, PREOF may replicate the packets of a flow via a so-called Replication function, splitting the copies into the multiple member flows, and may then rejoin those member flows at one or more other points, eliminating the replicates via a so-called Elimination function. PREOF may then deliver the reconstituted flow from those points. In other words, PREOF may be understood to enable to send packets on two, or more, maximally disjoint paths by replicating the packets via the Replication function, then combine the flows and delete extra packets via the Elimination function, which functions may be as described, for example, in the IEEE Std. 802.1CB-2017 standard.

### DetNet label allocation

DetNet may use the downstream label distribution method for the service label (S-Label), that is, the method whereby downstream nodes may allocate the label(s) to be used when traffic may be sent to them. S-Labels may be allocated for nodes with DetNet service sub-layer functions, such as Switching provider edge (S-PE) nodes and PREOF nodes. An S-Label of a received DetNet MPLS packet may be called ingress S-Label, and it may be used to identify an associated DetNet flow locally on the node for proper DetNet processing. The S-Label of a sent DetNet MPLS packet may be called egress S-Label, and it may be used to identify an associated DetNet flow at the downstream DetNet service-aware peer node.

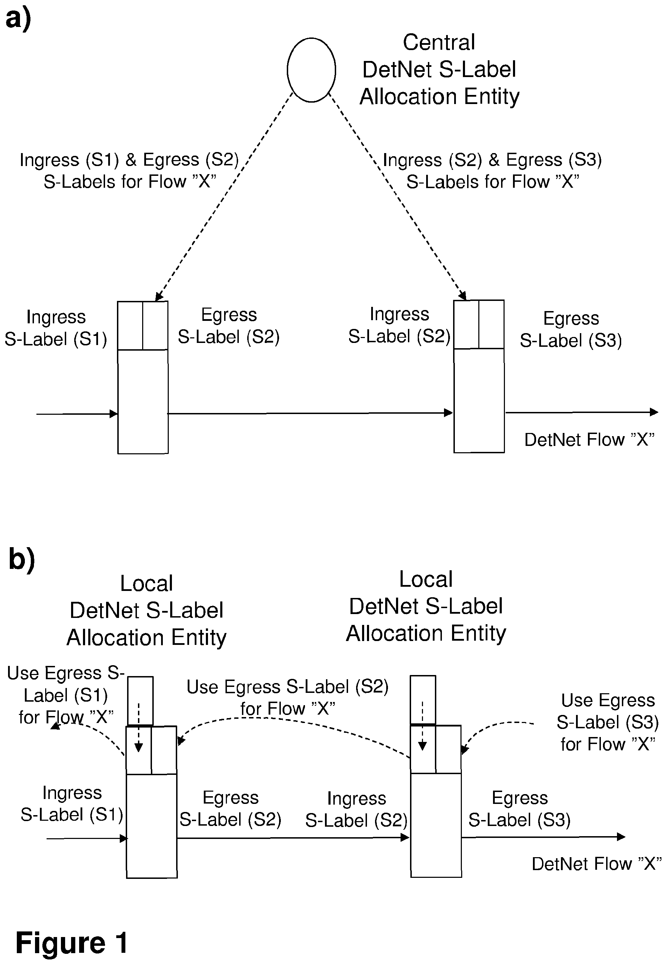

A "DetNet Service Label allocation Entity" may be understood to be responsible for allocating S-Labels, and it may be implemented in a network: (i) centralized, (ii) node local or (iii) combined. **Figure 1** is a schematic diagram illustrating a non-limiting example of a "DetNet Service Label allocation Entity", using a centralized allocation method in panel a) and a node local allocation method in panel b). In case of a centralized implementation, a central entity may allocate the S-Labels for the DetNet network and may configure the nodes, e.g., via netconf, along the path of a DetNet Flow with related S-Label information. In case of node local implementation, the "DetNet Service Label allocation Entity" may reside on the DetNet node and may allocate the ingress S-Labels. These S-Labels may be signaled to the upstream nodes with DetNet service sub-layer functions. Egress S-Labels may be learned via signaling from downstream nodes with DetNet service sub-layer functions. In case of a combined method, any mix of the centralized and node local allocation may be used.

It may be noted that a node local label allocation may also be known as a "Distributed label allocation".

PREOF may be understood to be a DetNet service sub-layer related function. S-Labels may be understood to provide identification at the downstream DetNet service sub-layer receiver, not the sender. As such, S-Labels may be understood to need to be allocated by the entity that may be controlling the label space of the receiving node of the service sub-layer.

Because S-Labels may be understood to be local to each node, rather than being a global identifier within a domain, they may be understood to need to be advertised to their upstream DetNet service-aware peer nodes.

In spite of the advancements provided by PREOF, the functionality supported in single nodes is limited, which may place demands on the numbers of nodes that may be required to support certain processing of flows, resulting in highly complex network topologies. Complex network topologies may lead to additional errors, and delays in the processing of the flows.

### SUMMARY

This invention is defined by the appended claims.

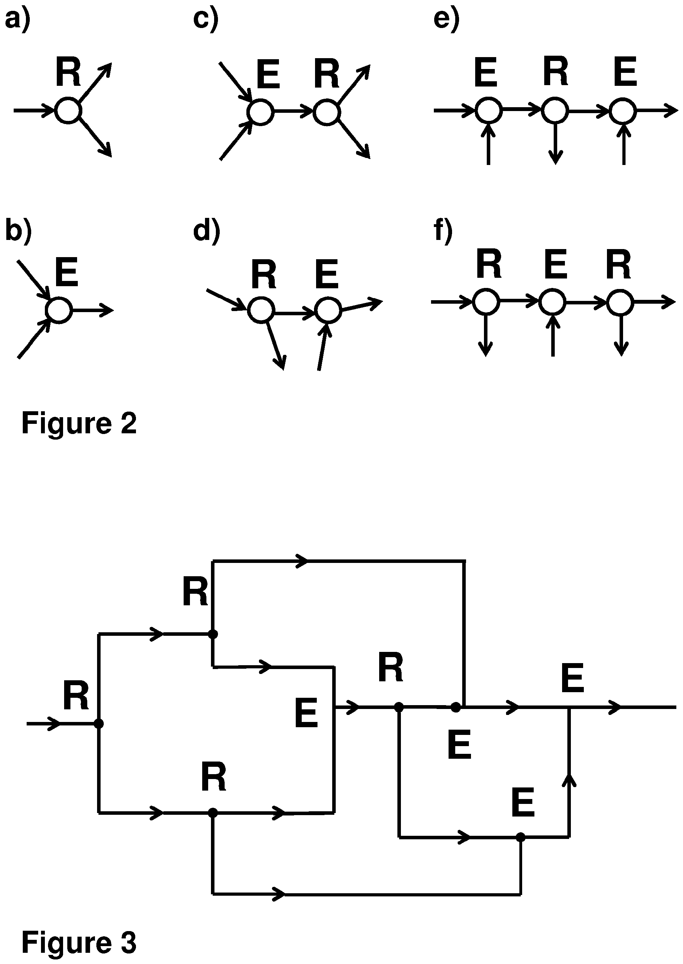

Depending on network topology and the node and/or link characteristics, there may be multiple nodes in a DetNet network, where network design may require the implementation of packet replication function(s) (PRF or R) and/or packet elimination function(s) (PEF or E). The number of PREOF, PRF or PEF, functions, which may be needed on a node for a given DetNet flow may be referred herein as the "number of PREOF stages" on that node. For example, a node configured for only a single PRF or PEF may be referred as a "single PREOF stage node". A node configured for a PEF function followed by a PRF function may be referred as a "two PREOF stage node", and so on. **Figure 2** is a schematic diagram depicting six different nodes with different PREOF stages, wherein each node is depicted in panel a), b), c), d), e) and f), respectively. The arrows depict the participating member flows. The nodes depicted in panels a) and b) have a single PREOF stage, R in a), and E in b). The nodes depicted in panels c) and d) have double PREOF stages: E and R in c) and R and E in d). The nodes depicted in panels e) and f) have triple PREOF stages: E, R and E in e) and R, E and R in f).

It may be understood that other combinations than those represented in Figure 2 may be possible. From the perspective of an external node, stages with the same types may be collapsed, e.g., R+R = R, E+E+R = E+R.

It may be also appreciated that multiple stages of PREOF may make sense when member flows may be non-risk-sharing. As a general design rule, a PREOF function may be understood to never have to receive back its own already processed packets from a PREOF function of another node. In other words, the PREOF graph describing the PREOF functions along the path of a DetNet Flow may be understood to need to be loop free.

**Figure 3** is a schematic diagram depicting an example of a PREOF graph, showing a DetNet Flow over a given network topology depicting the different PREOF stages, as represented with the with the designed PRF (R) and PEF (E) points. The arrows depict the participating member flows.

The current specification does not support multiple PREOF stage nodes.

In order to be multi PREOF stage capable, a node may be understood to need to allow daisy chaining of PRF/PEF functions. This may be understood to mean that some of the member flows may become internal on the node, so implementation of PREOF functions may be understood to need to be able to work with internal member flows as well. Furthermore, it may be understood to also be required that PRF and PEF functions may be able to set the flow identification parameters of their output packets, as they may be an input member flow for the next PREOF stage.

For the PRF function, setting the flow identification parameter, e.g., S-Label, of the resulting member flows may be performed as defined in https://tools.ietf.org/html/draft-ietf-detnet-mpls-09, section 4.2.2.1., Packet Replication Function Processing. According to such existing methods, when replication is configured, the same app-flow data may be sent over multiple outgoing DetNet member flows using forwarding sub-layer Label Switched Paths (LSPs). An S-Label value may be understood to need to be configured per outgoing member flow. The same d-CW field value may be understood to need to be used on all outgoing member flows for each replicated MPLS packet.

However, for the PEF function, using a single flow identification parameter, e.g., a single S-Label value, is mandated in https://tools.ietf.org/html/draft-ietf-detnet-mpls-09, section 5.1., Service Sub-Layer Information Summary. According to such existing methods, the information that may be understood to be needed on service sub-layer aware nodes that receive DetNet MPLS traffic, may be summarized as being on a per service basis: the incoming S-Label for the service. This limitation was defined in order to simplify the implementation of the PEF functions via minimizing the table lookups that may be needed during the elimination packet processing. Table lookups may be understood to be used during stream identification and finding out what functions may need to be executed on a packet.

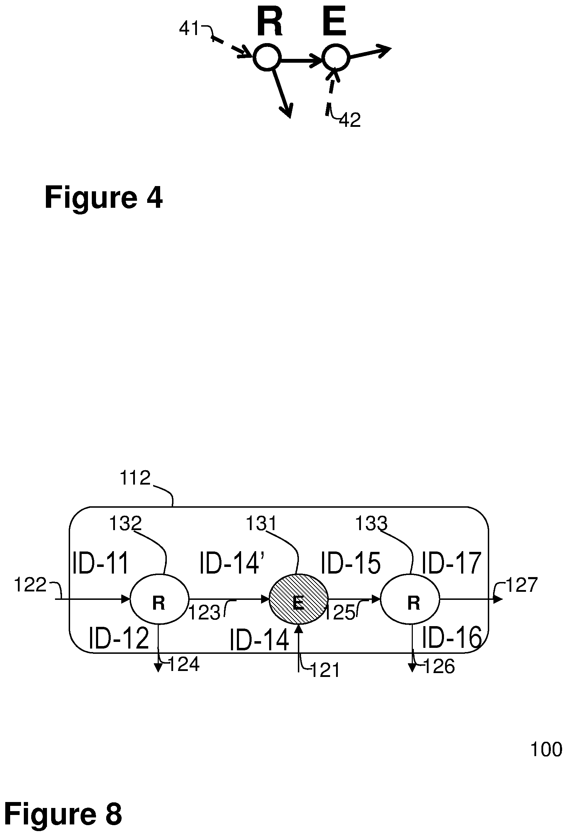

This allocation of a single S-Label for all ingress member flows is not an issue in single stage PREOF scenarios, but prohibits the usage of multi stage PREOF functions in DetNet MPLS networks. For example, according to the existing methods, it is not possible to distinguish ingress DetNet flow segments in an S-Label allocation method in a 2 stage R-E function defined for a DetNet service, as they have to use the same S-Label according to the current IETF specifications. **Figure 4** illustrates the problematic ingress DetNet flow segments 41, 42 which may be understood to need to be distinguished in multi PREOF stage scenarios in such an example, which are highlighted with dashed lines. According to the current DetNet specifications the dashed line member flows 41 and 42 on Figure 4 must use the same S-Label, which would make them undistinguishable within the node. Because of the same S-Label value, the node would not be able to select what stages of the PREOF functions should be applied for the received packet, for example, R-E for member flow 41 and E only for member flow 42.

According to the foregoing, in order to implement a multi PREOF stage node, there may be understood to be a need to improve the allocation of labels to the flows of packets, particularly to ingress member flows. In particular examples, this may be understood to mean that there may be a need to improve the "DetNet Service Label allocation Entity".

It is an object of embodiments herein to improve the handling of flows of packets in a communications network. It is a particular object of embodiments herein to improve the handling of flows of packets in a communications network by enabling to handle two or more ingress member flows split from a flow of packets via at least one elimination function, and at least one replication function supported by a single node.

According to a first aspect of embodiments herein, the object is achieved by a method performed by a first node. The method is for configuring a second node to handle two or more ingress member flows split from a flow of packets. Each of the two or more ingress member flows comprises a plurality of packets. The configuring is to handle the two or more ingress member flows via at least one elimination function, and at least one replication function supported by the second node. The first node and the second node operate in a communications network. The first node allocates a first indication to a first ingress member flow to be input into the at least one elimination function. The first indication identifies the first ingress member flow as being comprised in the flow of packets. The first indication uniquely identifies the first ingress member flow from at least one of the following: a) a second ingress member flow, of the two or more ingress member flows, to be input into the at least one replication function; and b) any other ingress member flow, of the two or more ingress member flows to be input into the second node. The first node also configures the second node to use the allocated first indication.

According to a second aspect of embodiments herein, the object is achieved by a method performed by the second node. The method is for handling the two or more ingress member flows split from the flow of packets. Each of the two or more ingress member flows comprise a plurality of packets. The second node supports the at least one elimination function, and the at least one replication function. The second node operates in the communications network. The second node receives a configuration from the first node operating in the communications network. The configuration configures the second node to use the first indication for the first ingress member flow to be input into the at least one elimination function. The first indication identifies the first ingress member flow as being comprised in the flow of packets. The indication uniquely identifies the first ingress member flow from the at least one of: a) the second ingress member flow, of the two or more ingress member flows to be input into the at least one replication function, and ii) any other ingress member flow, of the two or more ingress member flows, to be input into the second node. The second node also assigns the first indication to the first ingress member flow to be input into the at least one elimination function.

According to a third aspect of embodiments herein, the object is achieved by the first node for configuring the second node to handle the two or more ingress member flows configured to be split from the flow of packets. Each of the two or more ingress member flows is configured to comprise a plurality of packets. The configuring is configured to be to handle the two or more ingress member flows via the at least one elimination function, and the at least one replication function configured to be supported by the second node. The first node and the second node are configured to operate in the communications network. The first node is further configured to allocate the first indication to the first ingress member flow to be input into the at least one elimination function. The first indication is configured to identify the first ingress member flow as being comprised in the flow of packets. The first indication is further configured to uniquely identify the first ingress member flow from at least one of: i) the second ingress member flow, of the two or more ingress member flows, to be input into the at least one replication function, and ii) any other ingress member flow, of the two or more ingress member flows to be input into the second node. The first node is also configured to configure the second node to use the allocated first indication.

According to a fourth aspect of embodiments herein, the object is achieved by the second node, for handling the two or more ingress member flows configured to be split from the flow of packets. Each of the two or more ingress member flows are configured to comprise a plurality of packets. The second node is configured to support the at least one elimination function, and the at least one replication function. The second node is configured to operate in the communications network. The second node is also configured to, receive the configuration from the first node configured to be comprised in the communications network. The configuration is configured to configure the second node to use the first indication for the first ingress member flow to be input into the at least one elimination function. The first indication is configured to identify the first ingress member flow as being comprised in the flow of packets. The indication is further configured to uniquely identify the first ingress member flow from at least one of: i) the second ingress member flow, of the two or more ingress member flows, to be input into the at least one replication function, and ii) any other ingress member flow, of the two or more ingress member flows, to be input into the second node. The second node is further configured to assign the first indication to the first ingress member flow to be input into the at least one elimination function.

According to a seventh non-claimed aspect of embodiments herein, the object is achieved by a computer program, comprising instructions which, when executed on at least one processor, cause the at least one processor to carry out the method performed by the first node.

According to an eighth non-claimed aspect of embodiments herein, the object is achieved by a computer-readable storage medium, having stored thereon the computer program, comprising instructions which, when executed on at least one processor, cause the at least one processor to carry out the method performed by the first node.

According to a ninth non-claimed aspect of embodiments herein, the object is achieved by a computer program, comprising instructions which, when executed on at least one processor, cause the at least one processor to carry out the method performed by the second node.

According to a tenth non-claimed aspect of embodiments herein, the object is achieved by a computer-readable storage medium, having stored thereon the computer program, comprising instructions which, when executed on at least one processor, cause the at least one processor to carry out the method performed by the second node.

By allocating, and then configuring the second node to use, the first indication, the first node enables to distinguish different ingress flow members, e.g., ingress DetNet flow segments, to be input into the second node, as they no longer need to use the same identification, e.g., S-Label. Therefore, the first node and in turn the second node, may be understood to be enabled to provide support for multi-stage PREOF in the communications network, so that the second node may be enabled to select which stage of the PREOF functions may need to be applied to each of the two or more ingress member flows. This in turn enables to comply with the service requirements of the communications network, e.g., a DetNet, without unnecessarily increasing the complexity of the topology of the communications network in terms of e.g., number of nodes and links. Moreover, the DetNet service setup may be enabled to be more flexible. PREOF implementation may be concentrated on selected nodes, as opposed to in all nodes. The reliability over a given network topology may therefore be enabled, e.g., to cope with multiple simultaneous failures. Moreover, with this new label allocation approach, it may be possible to keep the implementation of the at least one elimination function, e.g., PEF, simple, without increasing the number of table lookups that may be required.

### BRIEF DESCRIPTION OF THE DRAWINGS

Examples of embodiments herein are described in more detail with reference to the accompanying drawings, according to the following description.
Figure 1 is a schematic diagram illustrating two non-limiting examples of a "DetNet Service Label allocation Entity" centralized, in panel a), or node local, in panel b).
Figure 2 is a schematic diagram illustrating different examples, each in panel a)-f), of nodes with single, double and triple PREOFstages, according to existing methods.
Figure 3 is a schematic diagram illustrating an example of a graph of a DetNet Flow with PREOF functions, according to existing methods.
Figure 4 is a schematic diagram illustrating an example of ingress DetNet flow segments.
Figure 5 is a schematic diagram illustrating a non-limiting example of a communications network, according to embodiments herein.
Figure 6 is a flowchart depicting embodiments of a method in a first node, according to embodiments herein.
Figure 7 is a flowchart depicting embodiments of a method in a second node, according to embodiments herein.
Figure 8 is a schematic diagram illustrating an example of the first indication and the second indication, according to embodiments herein.
Figure 9 is a schematic block diagram illustrating two non-limiting examples, a) and b), of a first node, according to embodiments herein.
Figure 10 is a schematic block diagram illustrating two non-limiting examples, a) and b), of a second node, according to embodiments herein.

### DETAILED DESCRIPTION

For the implementation of a multi-stage PREOF node, there may be understood to be a need to enhance the "DetNet Service Label allocation Entity" to allow creating multiple incoming S-Label values when PEF may be configured on a DetNet node.

Several embodiments are comprised herein, which address these problems of the existing methods, as described in the Summary section. Embodiments herein may be understood to relate to supporting multi-stage PREOF in a communications network, e.g., a DetNet. Embodiments herein address how multi-stage PREOF functionality may be achieved within a single node, e.g., a single MPLS node, and provide the extensions that may need to be added to the relevant standards. Further particularly, embodiments herein may be understood to provide a label allocation method. Particular embodiments herein may focus on DetNet MPLS scenarios.

The method described in embodiments herein may be understood to introduce multi-stage PREOF notes by enhancing the "DetNet Service Label allocation Entity" with the allocation of multiple incoming S-Label values on a DetNet node, for example, making possible the allocation of different S-Labels per ingress member flow. Furthermore, the method may be understood to provide proper selection of ingress S-Labels to ensure that the implementation complexity of PEF, such as the number of table lookups, may not be increased.

Embodiments herein may focus on an improvement of the PREOF function in order to allow the implementation of multi PREOF stage DetNet nodes. Furthermore, the new improved label allocation method may be understood to be constructed in a way to avoid the increase of implementation complexity of the PEF function.

The embodiments will now be described more fully hereinafter with reference to the accompanying drawings, in which examples are shown. In this section, embodiments herein are illustrated by exemplary embodiments. It should be noted that these embodiments are not mutually exclusive. Components from one embodiment or example may be tacitly assumed to be present in another embodiment or example and it will be obvious to a person skilled in the art how those components may be used in the other exemplary embodiments.

Although terminology from DetNet and MPLS has been used in this disclosure to exemplify the embodiments herein, this should not be seen as limiting the scope of the embodiments herein to only the aforementioned system. Other systems supporting similar or equivalent functionality may also benefit from exploiting the ideas covered within this disclosure. In future network access, the terms used herein may need to be reinterpreted in view of possible terminology changes in future radio access technologies.

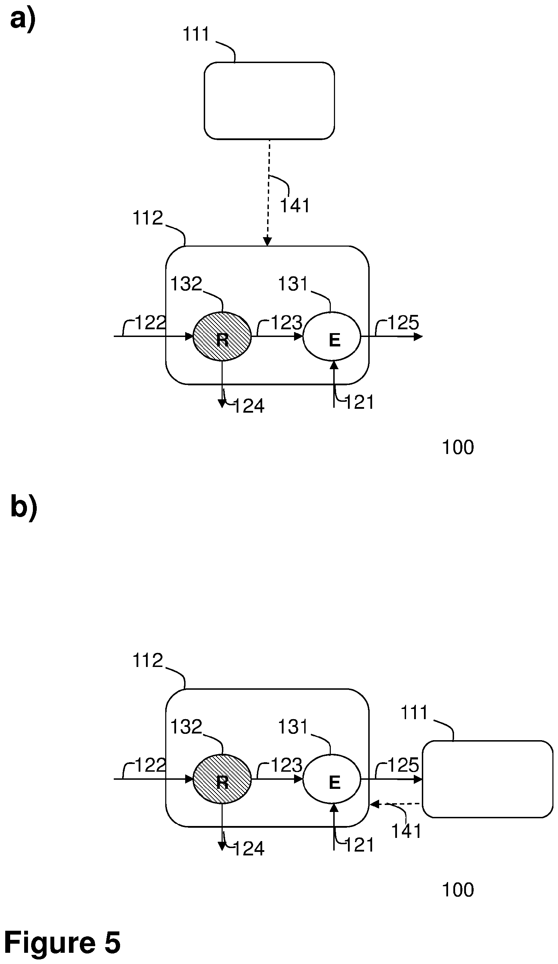

**Figure 5** is a schematic diagram depicting two non-limiting examples, in panels a) and b), respectively, of a **communications network 100,** in which embodiments herein may be implemented. The communications network 100 may be understood as a computer network, as depicted in in the non-limiting example of Figure 5. The communications network 100 may be an MPLS network providing transport for end-to-end DetNet service, or a network with similar functionality. In some embodiments, the communications network 100 may be a deterministic network, e.g., a DetNet. In particular embodiments, the communications network 100 may support Time Sensitive Networking (TSN). In some example implementations, the communications network 100 may be implemented in a **telecommunications network,** sometimes also referred to as a cellular radio system, cellular network or wireless communications system. In some examples, the telecommunications network may comprise network nodes which may serve receiving nodes, such as wireless devices, with serving beams. In some examples, the telecommunications network may for example be a network such as a 5G system, a 5G Network, or a Next Gen network. The telecommunications network may also support other technologies, such as a Long-Term Evolution (LTE) network, e.g. LTE Frequency Division Duplex (FDD), LTE Time Division Duplex (TDD), LTE Half-Duplex Frequency Division Duplex (HD-FDD), LTE operating in an unlicensed band, Wideband Code Division Multiple Access (WCDMA), Universal Terrestrial Radio Access (UTRA) TDD, GSM/Enhanced Data Rate for GSM Evolution (EDGE) Radio Access Network (GERAN) network, Ultra-Mobile Broadband (UMB), EDGE network, network comprising of any combination of Radio Access Technologies (RATs) such as e.g. Multi-Standard Radio (MSR) base stations, multi-RAT base stations etc., any 3rd Generation Partnership Project (3GPP) cellular network, Wireless Local Area Network/s (WLAN) or WiFi network/s, Worldwide Interoperability for Microwave Access (WiMax), IEEE 802.15.4-based low-power short-range networks such as IPv6 over Low-Power Wireless Personal Area Networks (6LowPAN), Zigbee, Z-Wave , Bluetooth Low Energy (BLE), or any cellular network or system.

The communications network 100 comprises nodes, whereof a **first node 111** and a **second node 112** are depicted in the non-limiting example of Figure 5. It may be understood that more nodes may be comprised in the communications network 100, and that the number of nodes depicted in Figure 5 is for illustration purposes only. Each of the first node 111 and the second node 112 may be understood, respectively, as a first computer system and a second computer system. In particular, any of the first node 111 and the second node 112 may be a transport node, such as e.g., a router, a management entity, or a gateway that is, a networking device that may be enabled to forward a flow of packets between nodes, that is a source entity and a destination entity, e.g., in a pipeline. Any of the first node 111 and the second node 112 may be under the ownership or control of a service provider, or may be operated by the service provider or on behalf of the service provider. Any of the first node 111 and the second node 112 may be implemented, in as a standalone server in e.g., a host computer in the cloud. Any of the first node 111 and the second node 112 may be comprised in a radio network node in a Radio Access Network (RAN), e.g., a gNB, of the telecommunications network, or in a core network of the telecommunications network.

The first node 111 may be understood as a node capable of allocating indications to identify **two or more ingress member flows 121, 122** of a flow of packets routed via the second node 112 from a source entity to a destination entity. The two or more ingress member flows 121, 122 may be comprised in a plurality of member flows comprising other member flows 123, 124, 125 split from the flow of packets. For example, the first node 111 may be understood to manage an allocation entity for service labels, such as e.g., DetNet Service Labels. That is, in some examples, the first node 111 may manage a DetNet Service Label allocation Entity. The first node 111 may manage a Central DetNet S-Label Allocation Entity, or a Local DetNet S-Label Allocation Entity. The indications, e.g., service labels, that may be allocated by the first node 111, may then be used by the second node 112.

The second node 112 may be understood as a node capable of processing a compound flow of packets routed via the second node 112 from a source entity to a destination entity. A compound flow, e.g., a DetNet compound flow, may be understood as a flow, e.g., DetNet flow, that may have been separated into multiple duplicate member flows, e.g., DetNet member flows, for service protection at the service sub-layer, e.g., DetNet service sub-layer. Member flows may be merged back into a single compound flow such that there may be no duplicate packets. "Compound" and "member" may be understood to be strictly relative to each other, not absolutes; a compound flow comprising multiple member flows may, in turn, be a member of a higher-order compound. Different flows may comprise different numbers of packets. The two or more ingress member flows 121, 122 comprise a **first ingress member flow 121** and a **second ingress member flow 122.** In Figure 5, each of the member flows 121, 122, 123, 124, 125 is depicted by an arrow, representing the direction of the member flow. To process the two or more ingress member flows 121, 122 of the flow of packets routed via the second node 112 from the source entity to the destination entity, the second node 112 may comprise one or more functions. The second node 112 supports **at least one elimination function** (E) **131** and **at least one replication function (R) 132** to process the member flows 121, 122, 123, 124, 125 of the flow of packets routed via the second node 112 from the source entity to the destination entity. The non-limiting examples of Figure 5, depict the second node 112 comprising a **first elimination function 131,** depicted with a solid white circle, and a **first replication function 132,** depicted by a striped circle.

It may be noted that in the non-limiting examples of Figure 5, the first elimination function 131 follows the first replication function 132. In other examples which are not depicted, the first elimination function 131 may precede the first replication function 132. It may also be understood that the second node 112 may comprise additional functions.

The first node 111 may be configured to communicate within the communications network 100 with the second node 112 over a **link 141** or connection, which may be a wired link, a radio link, an infrared link, etc... The connection may be understood to be able to be comprised of a plurality of individual links. The connection may be a direct link or it may go via one or more computer systems or one or more core networks in the communications network 100, which are not depicted in Figure 5, or it may go via an optional intermediate network. The intermediate network may be one of, or a combination of more than one of, a public, private or hosted network; the intermediate network, if any, may be a backbone network or the Internet; in particular, the intermediate network may comprise two or more sub-networks, which is not shown in Figure 5.

In general, the usage of "first" and/or "second" herein may be understood to be an arbitrary way to denote different elements or entities, and may be understood to not confer a cumulative or chronological character to the nouns they modify.

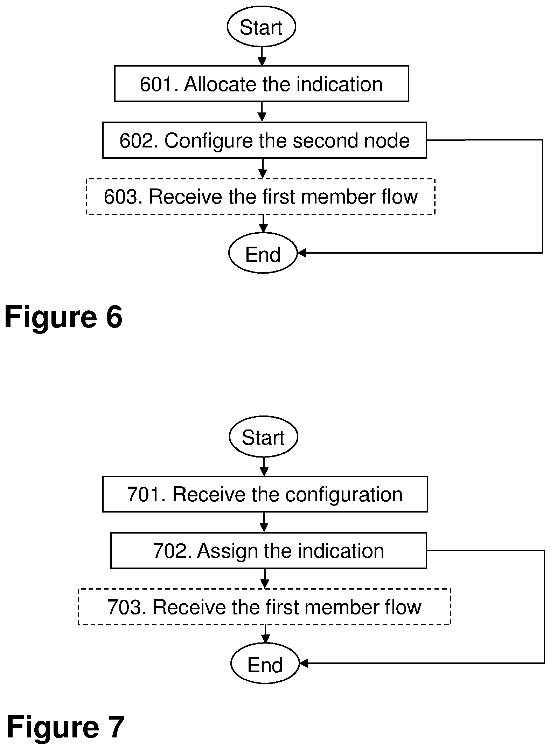

Embodiments of a method performed by the first node 111, will now be described with reference to the flowchart depicted in **Figure 6****.** The method is for configuring the second node 112 to handle two or more ingress member flows 121, 122 split from a flow of packets. Each of the two or more ingress member flows 121, 122 comprises a plurality of packets. The configuring is to handle the two or more ingress member flows 121, 122 via the at least one elimination function 131, and the at least one replication function 132 supported by the second node 112. The first node 111 and the second node 112 operate in the communications network 100.

As mentioned earlier, in some embodiments, the communications network 100 may be a Deterministic Network (DetNet).

The first node 111, in some particular embodiments, may manage a DetNet Service Label allocation Entity.

In some embodiments, the second node 112 may support Multi Protocol Label Switching (MPLS). The second node 112, in some particular embodiments, may support multi-stage Packet Replication, Elimination, and Ordering Functions (PREOF).

The method may comprise some of the following actions. In some embodiments all the actions may be performed. Several embodiments are comprised herein. One or more embodiments may be combined, where applicable. All possible combinations are not described to simplify the description. It should be noted that the examples herein are not mutually exclusive. Components from one example may be tacitly assumed to be present in another example and it will be obvious to a person skilled in the art how those components may be used in the other examples. In Figure 6, an optional action is indicated with dashed boxes.

### Action 601

The first node 111, in this Action 601, allocates a first indication to the first ingress member flow 121 to be input into the at least one elimination function 131. The first indication identifies the first ingress member flow 121 as being comprised in the flow of packets. The indication uniquely identifies the first ingress member flow 121 from at least one of: i) the second ingress member flow 122, of the two or more ingress member flows 121, 122, to be input into the at least one replication function 132, and ii) any other ingress member flow, of the two or more ingress member flows 121, 122, to be input into the second node 112, that is, any other ingress member flow than the second ingress member flow 122.

The allocating in this Action 601 may further comprise allocating a second indication to the second ingress member flow 122 to be input into the at least one replication function 132. The second indication may identify the second ingress member flow 122 as being comprised in the flow of packets. The indication may uniquely identify the second ingress member flow 122 from at least one of: i) the first ingress member flow 121, of the two or more ingress member flows 121, 122, to be input into the at least one elimination function 131, and ii) any other ingress member flow, of the two or more ingress member flows 121, 122, to be input into the second node 112, that is, any other ingress member flow than the first ingress member flow 121.

Any of the first indication and the second indication may be a label. The label may be an Ingress Service label (S-label). Any of the first indication and the second indication may be e.g., values of a "DetNet Flow ID (S-Label)" in a multi stage PREOF node.

By allocating the first indication and/or the second indication, the first node 111 is enabled to then configure the second node 112 with the allocated first indication and/or second indication, thereby enabling to distinguish different ingress member flows, e.g., ingress DetNet flow segments, as they may no longer need to use the same identification, e.g., S-Label. Therefore, the first node 111 may be understood to provide support for multi-stage PREOF in the second node 112. This, in embodiments wherein the communications network 100 may be a DetNet, may in turn may be understood to enable to comply with the service requirements of the DetNet, without unnecessarily increasing the complexity of the topology of the communications network 100 in terms of e.g., number of nodes and links. Moreover, the DetNet service setup may be enabled to be more flexible. PREOF implementation may be concentrated on selected nodes, as opposed to in all nodes. The reliability over a given topology may therefore be enabled, e.g., to cope with multiple simultaneous failures. Moreover, with this new label allocation approach, it may be ensured that the implementation complexity of PEF, that is, the number of table lookups, may not be increased, and it may remain the same as in the current specifications.

### Action 602

In this Action 602, the first node 111 configures the second node 112 to use the allocated first indication.

The configuring in this Action 602 may further comprise configuring the second node 112 to use the allocated second indication.

Configuring in this Action 602 may be understood as sending a configuration.

In some embodiments, the at least one elimination function 131 may comprise a first elimination function 131 having the first ingress member flow 121 as input, and the at least one replication function 132 may comprise a first replication function 132. In some of such embodiments, the configuring in this Action 602 may further comprise configuring the first replication function 132 to use the first indication to identify a member flow 123 to be output from the first replication function 132 and input into the first elimination function 131.

By configuring the second node 112 with the first indication and/or the second indication, the first node 111 enables the second node 112 to distinguish different ingress member flows, e.g., ingress DetNet flow segments, as they may be understood to no longer need to use the same identification, e.g., S-Label. Therefore, the first node 111 may be understood to provide support for multi-stage PREOF in the second node 112. This, in embodiments wherein the communications network 100 may be a DetNet, may in turn be understood to enable to comply with the service requirements of the DetNet, without unnecessarily increasing the complexity of the topology of the communications network 100.

### Action 603

In some embodiments, the first node 111 may be the same as the second node 112. In some of such embodiments, the at least one elimination function 131 may comprise the first elimination function 131, and the at least one replication function 132 comprise the first replication function 132.

In some of such embodiments, in this Action 603, the first node 111 may receive at least one of: i) at the first elimination function 131, the first ingress member flow 121 as input, as identified by the first indication, and ii) at the first replication function 132, the second ingress member flow 122as input, as identified by the second indication.

By receiving the first ingress member flow 121 at the first function 131 as input, as identified by the first indication, or the second ingress member flow 122 as input at the second function 132, as identified by the second indication, the first node 111 may be understood to be enabled to distinguish between the different ingress flow segments. Therefore, the first node 111 may provide support for multi-stage PREOF in the communications network 100. This, in embodiments wherein the communications network 100 may be a DetNet, may in turn may be understood to enable to comply with the service requirements of a DetNet, without unnecessarily increasing the complexity of the topology of the communications network 100.

According to the foregoing, the problem of the existing methods illustrated in Figure 4 may be solved by embodiments herein, by implementing the following improvement in a label allocation entity: first by allocating multiple different S-Label values for the ingress DetNet Member Flows when their first applied PREOF stages may be different; second, by configuring the PRF function before the PEF stage so that its internal DetNet Member Flow output(s) may become the same S-Label as the ingress DetNet Member flows of the PEF stage.

Embodiments of a method performed by the second node 112, will now be described with reference to the flowchart depicted in **Figure 7****.** The method may be understood to be for handling the two or more ingress member flows 121, 122 split from the flow of packets. Each of the two or more ingress member flows 121, 122 may comprise a plurality of packets. The second node 112 supports the at least one elimination function 131, and the at least one replication function 132 to process the ingress member flows. The second node 112 operates in the communications network 100.

As mentioned earlier, in some embodiments, the communications network 100 may be a Deterministic Network (DetNet).

In some embodiments, the second node 112 may support Multi Protocol Label Switching (MPLS). The second node 112, in some particular embodiments, may support multi-stage Packet Replication, Elimination, and Ordering Functions (PREOF).

The first node 111, in some particular embodiments, may manage a DetNet Service Label allocation Entity.

The method may comprise the actions described below. Several embodiments are comprised herein. In some embodiments all the actions may be performed. In some embodiments some of the actions may be performed. One or more embodiments may be combined, where applicable. All possible combinations are not described to simplify the description. It should be noted that the examples herein are not mutually exclusive. Components from one example may be tacitly assumed to be present in another example and it will be obvious to a person skilled in the art how those components may be used in the other examples. In Figure 7, an optional action is indicated with a dashed box.

The detailed description of some of the following corresponds to the same references provided above, in relation to the actions described for the first node 111, and will thus not be repeated here to simplify the description. For example, in some particular embodiments, the first node 111 may be the same as the second node 112.

### Action 701

In this Action 701, the second node 112, receives a configuration from the first node 111 operating in the communications network 100. The configuration configures the second node 112 to use the first indication for the first ingress member flow 121 to be input into the at least one elimination function 131. The first indication identifies the first ingress member flow 121 as being comprised in the flow of packets. The indication uniquely identifies the first ingress member flow 121 from at least one of: i) the second ingress member flow 122, of the two or more ingress member flows 121, 122, to be input into the at least one replication function 132, and ii) any other ingress member flow, of the two or more ingress member flows 121, 122, to be input into the second node 112, that is, other than the second ingress member flow 122.

The receiving in this Action 701 may be implemented, e.g., via the link 141.

The configuration may further configure the second node 112 to use the second indication for the second ingress member flow 122 to be input into the at least one replication function 132. The second indication may identify the second ingress member flow 122 as being comprised in the flow of packets. The second indication may uniquely identify the second ingress member flow 122 from at least one of: i) the first ingress member flow 121, of the two or more ingress member flows 121, 122, to be input into the at least one elimination function 131, and ii) any other ingress member flow, of the two or more ingress member flows 121, 122, to be input into the second node 112, that is, any other ingress member flow than the first ingress member flow 121.

In some embodiments, the at least one elimination function 131 may comprise the first elimination function 131 having the first ingress member flow 121 as input, and the at least one replication function 132 may comprise the first replication function 132. In some of such embodiments, the configuration may further configure the first replication function 132 to use the first indication to identify a member flow 123 to be output from the first replication function 132 and input into the first elimination function 131.

Any of the first indication and the second indication may be a label. The label may be an Ingress Service label (S-label).

By receiving the configuration from the first node 111 with the first indication and/or the second indication, the second node 112 may be understood to be enabled to distinguish different ingress member flows, e.g., ingress DetNet flow segments, as they no longer need to use the same identification, e.g., S-Label. Therefore, the second node 112 may be understood to provide support for multi-stage PREOF in the communications network 100. This, in embodiments wherein the communications network 100 may be a DetNet, may in turn may be understood to enable to comply with the service requirements of a DetNet, without unnecessarily increasing the complexity of the topology of the communications network 100.

### Action 702

In this Action 702, the second node 112 assigns the first indication to the first ingress member flow 121 to be input into the at least one elimination function 131. In some embodiments, the assigning in this Action 702 may further comprise assigning the second indication to the second ingress member flow 122 to be input into the at least one replication function 132.

The assigned first indication may be used by local PREOF functions according to their configuration. The assigned first indication may be communicated to the upstream DetNet neighbour to use it as egress S-Label on its appropriate egress member flow.

If multiple first indications, e.g., labels, are allocated, then both may be communicated to their respective upstream neighbour. The two or more ingress member flows 121, 122, e.g., the first ingress member flow 121 and the second ingress member flow 122, may have different nodes as upstream neighbour.

### Action 703

In this Action 703, the second node 112 may receive at least one of: i) at the first function 131, the first ingress member flow 121as input, as identified by the first indication, and ii) at the second function 132, the second ingress member flow 122as input, as identified by the second indication.

By receiving the first ingress member flow 121 at the first function 131 as input, as identified by the first indication, or the second ingress member flow 122 as input at the second function 132, as identified by the second indication, the second node 112 may be enabled to distinguish between the different ingress member flows. Therefore, the second node 112 may provide support for multi-stage PREOF in the communications network 100. This, in embodiments wherein the communications network 100 may be a DetNet, may in turn may be understood to enable to comply with the service requirements of a DetNet, without unnecessarily increasing the complexity of the topology of the communications network 100.

**Figure 8** is a schematic diagram depicting a non-limiting example of the second node 112, according to embodiments herein, wherein the communication network 100 is a DetNet. For the implementation of the second node 112 as a multi PREOF stage node, there may be understood to be a need to enhance the allocation entity of the incoming S-Label value, that is, to allow multiple S-Labels in some cases, when PEF may be configured on a DetNet node. In this example, the second node 122 supports a three stage PREOF scenario and comprises the at least one elimination function 131, the at least one replication function 132 and a second replication function 133. The DetNet Flow IDs for the three stage PREOF scenario of Figure 8 are depicted. There are two ingress member flows 122, 121, with ID-11 and ID-14, respectively, and there are three egress member flows 124, 136, 127, with ID-12, ID-16, and ID-17, respectively. Member flows with ID-14' and ID-15 are internal member flows, that is, they are not visible outside of the second node 112. In the scenario of Figure 8, applying the methods according to embodiments herein may be understood to mean that the first ingress member flow121 may be assigned the first indication, as ID-14, which is different from the second indication assigned to the second ingress member flow 122, which is ID-11. Then, the member flow with ID-14' may be configured to have the same S-Label as the member flow with ID-14. The apostrophe used in Figure 8 is only for better referencing the member flows in this text. By configuring the member flow 123 with ID-14' to be output from the first replication function 132 to have the same S-Label as the first ingress member flow 121 with ID-14, the implementation of the PEF function may be kept simple by minimizing the table lookups that may be needed during the elimination packet processing.

According to the foregoing, embodiments herein provide multiple advantages.

One advantage of embodiments herein is that they allow the implementation of multi stage PREOF functions in a DetNet node such as the second node 112, which may be understood to be a requirement in complex DetNet network topologies, including but not limited to DetNet networks with radio links. Replication and Elimination functions and their enhancements may be understood to play an important role in adding radio links and/or 5G systems to DetNet networks, e.g., for industrial verticals. A further advantage of embodiments herein is that the implementation of the PEF functions may be kept simple via minimizing the table lookups that may be needed during the elimination packet processing.

Another advantage of embodiments herein is that they enable easy addition of the disclosed functionality to existing PREOF implementations.

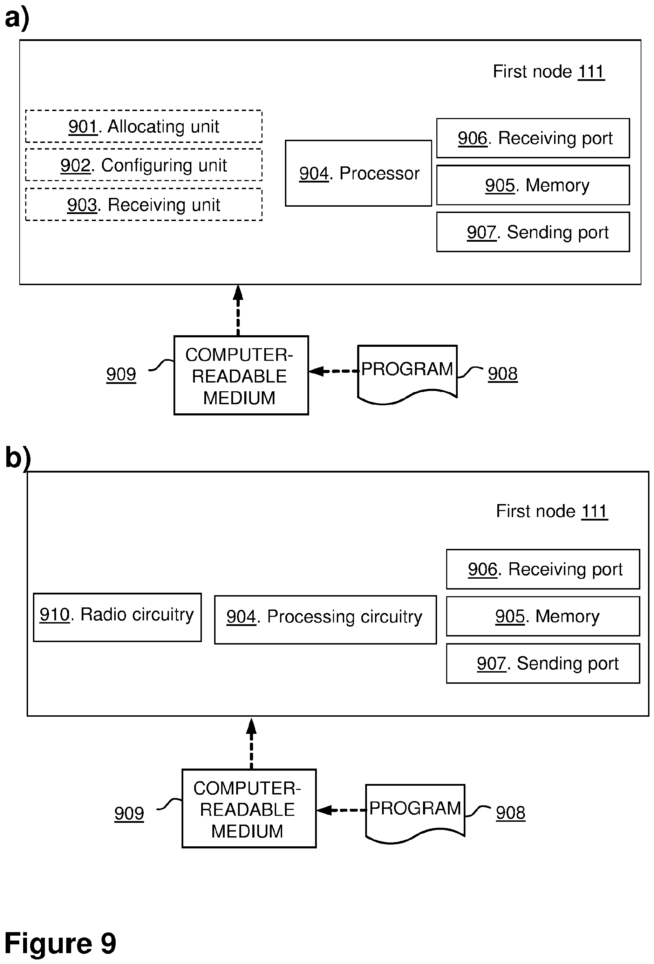

**Figure 9** depicts two different examples in panels a) and b), respectively, of the arrangement that the first node 111 may comprise to perform the method actions described above in relation to Figure 6. In some embodiments, the first node 111 may comprise the following arrangement depicted in **Figure 9a****.** The first node 111 is for configuring the second node 112 to handle the two or more ingress member flows 121, 122 split from the flow of packets. Each of the two or more ingress member flows 121, 122 are configured to comprise a plurality of packets. The configuring is configured to be to handle the two or more ingress member flows 121, 122 via at least one elimination function 131, and at least one replication function 132 configured to be supported by the second node 112. The first node 111 and the second node 112 are configured to operate in the communications network 100.

Several embodiments are comprised herein. Components from one embodiment may be tacitly assumed to be present in another embodiment and it will be obvious to a person skilled in the art how those components may be used in the other exemplary embodiments. The detailed description of some of the following corresponds to the same references provided above, in relation to the actions described for the first node 111, and will thus not be repeated here. For example, in some particular embodiments, the first node 111 may be the same as the second node 112.

The first node 111 is configured to, e.g. by means of an **allocating unit 901** within the first node 111 configured to, allocate the first indication to the first ingress member flow 121 to be input into the at least one elimination function 131. The first indication is configured to identify the first ingress member flow 121 as being comprised in the flow of packets. The first indication is further configured to uniquely identify the first ingress member flow 121 from at least one of: i) the second ingress member flow 122, of the two or more ingress member flows 121, 122, to be input into the at least one replication function 132, and ii) any other ingress member flow, of the two or more ingress member flows 121, 122, to be input into the second node 112.

In some embodiments, to allocate may be further configured to comprise allocating the second indication to the second ingress member flow 122 to be input into the at least one replication function 132. The second indication may be configured to identify the second ingress member flow 122 as being comprised in the flow of packets. The second indication may be further configured to uniquely identify the second ingress member flow 122 from at least one of: i) the first ingress member flow 121, of the two or more ingress member flows 121, 122, to be input into the at least one elimination function 131, and ii) any other ingress member flow, of the two or more ingress member flows 121, 122, to be input into the second node 112.

In some embodiments, the at least one elimination function 131 may be configured to comprise the first elimination function 131 having the first ingress member flow 121 as input, and the at least one replication function 132 may be configured to comprise the first replication function 132. In some of such embodiments, to configure may further comprise to configure the first replication function 132 to use the first indication to identify the member flow 123 configured to be output from the first replication function 132 and input into the first elimination function 131.

The first node 111 is further configured to, e.g. by means of a **configuring unit 902** within the first node 111 further configured to, configure the second node 112 to use the allocated first indication.

In some embodiments, to configure may be further configured to comprise configuring the second node 112 to use the second indication configured to be allocated.

In some embodiments, any of the first indication and the second indication may be configured to be a label.

In some embodiments, the label may be configured to be an Ingress Service label (S-label).

As mentioned earlier, in some embodiments, the first node 111 may be configured to be the same as the second node 112. In some of such embodiments, the first node 111 may be further configured to, e.g. by means of a **receiving unit 903** within the first node 111 configured to, receive at least one of: i) at the first function 131, the first ingress member flow 121 as input, as identified by the first indication, and ii) at the second function 132, the second ingress member flow 122 as input, as identified by the second indication.

In some embodiments, the second node 112 may be configured to support multi-stage Packet Replication, Elimination, and Ordering Functions (PREOF).

In some embodiments, the first node 111 may be configured to manage a DetNet Service Label allocation Entity.

In some embodiments, the second node 112 may be configured to support Multi Protocol Label Switching (MPLS).

In some embodiments, the communications network 100 may be configured to be a Deterministic Network (DetNet).

The embodiments herein may be implemented through one or more processors, such as a **processor 904** in the first node 111 depicted in Figure 9, together with computer program code for performing the functions and actions of the embodiments herein. The program code mentioned above may also be provided as a computer program product, for instance in the form of a data carrier carrying computer program code for performing the embodiments herein when being loaded into the in the first node 111. One such carrier may be in the form of a CD ROM disc. It is however feasible with other data carriers such as a memory stick. The computer program code may furthermore be provided as pure program code on a server and downloaded to the first node 111.

The first node 111 may further comprise a **memory 905** comprising one or more memory units. The memory 905 is arranged to be used to store obtained information, store data, configurations, schedulings, and applications etc. to perform the methods herein when being executed in the first node 111.

In some embodiments, the first node 111 may receive information from, e.g., the second node 112, and/or any of the other nodes in the communications network 100, through a **receiving port 906.** In some examples, the receiving port 906 may be, for example, connected to one or more antennas in first node 111. In other embodiments, the network node 101 first node 111 may receive information from another structure in the communications network 100 through the receiving port 906. Since the receiving port 906 may be in communication with the processor 904, the receiving port 906 may then send the received information to the processor 904. The receiving port 906 may also be configured to receive other information.

The processor 904 in the first node 111 may be further configured to transmit or send information to e.g., the second node 112, and/or any of the other nodes in the communications network 100, through a **sending port 907,** which may be in communication with the processor 904, and the memory 905.

Those skilled in the art will also appreciate that the units 901-903 described above may refer to a combination of analog and digital circuits, and/or one or more processors configured with software and/or firmware, e.g., stored in memory, that, when executed by the one or more processors such as the processor 904, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Those skilled in the art will also appreciate that any of the units 901-903 described above may be the processor 904 of the first node 111, or an application running on such processor 904.

Thus, the methods according to the embodiments described herein for the first node 111 may be respectively implemented by means of a **computer program 908** product, comprising instructions, i.e., software code portions, which, when executed on at least one processor 904, cause the at least one processor 904 to carry out the actions described herein, as performed by the first node 111. The computer program 908 product may be stored on a **computer-readable storage medium 909.** The computer-readable storage medium 909, having stored thereon the computer program 908, may comprise instructions which, when executed on at least one processor 904, cause the at least one processor 904 to carry out the actions described herein, as performed by the first node 111. In some embodiments, the computer-readable storage medium 909 may be a non-transitory computer-readable storage medium, such as a CD ROM disc, a memory stick, or stored in the cloud space. In other embodiments, the computer program 908 product may be stored on a carrier containing the computer program, wherein the carrier is one of an electronic signal, optical signal, radio signal, or the computer-readable storage medium 909, as described above.

The first node 111 may comprise an interface unit to facilitate communications between the first node 111 and other nodes or devices, e.g., the second node 112, and/or any of the other nodes in the communications network 100. In some particular examples, the interface may, for example, include a transceiver configured to transmit and receive radio signals over an air interface in accordance with a suitable standard.

In other embodiments, the first node 111 may comprise the following arrangement depicted in **Figure 9b****.** The first node 111 may comprise a **processing circuitry 904,** e.g., one or more processors such as the processor 904, in the first node 111 and the memory 905. The first node 111 may also comprise a **radio circuitry 910,** which may comprise e.g., the receiving port 906 and the sending port 907. The processing circuitry 904 may be configured to, or operable to, perform the method actions according to Figure 6, in a similar manner as that described in relation to Figure 9a. The radio circuitry 910 may be configured to set up and maintain at least a wireless connection with the second node 112, and/or any of the other nodes in the communications network 100. Circuitry may be understood herein as a hardware component.

Hence, embodiments herein also relate to the first node 111 operative to configure the second node 112 to handle the two or more ingress member flows 121, 122 configured to be split from the flow of packets. Each of the two or more ingress member flows 121, 122 is configured to comprise a plurality of packets. The configuring is configured to be to handle the two or more ingress member flows 121, 122 via the at least one elimination function 131, and the at least one replication function 132 configured to be supported by the second node 112. The first node 111 and the second node 112 are configured to operate in the communications network 100. The first node 111 may comprise the processing circuitry 904 and the memory 905, said memory 905 containing instructions executable by said processing circuitry 904, whereby the first node 111 is further operative to perform the actions described herein in relation to the first node 111, e.g., in Figure 6.

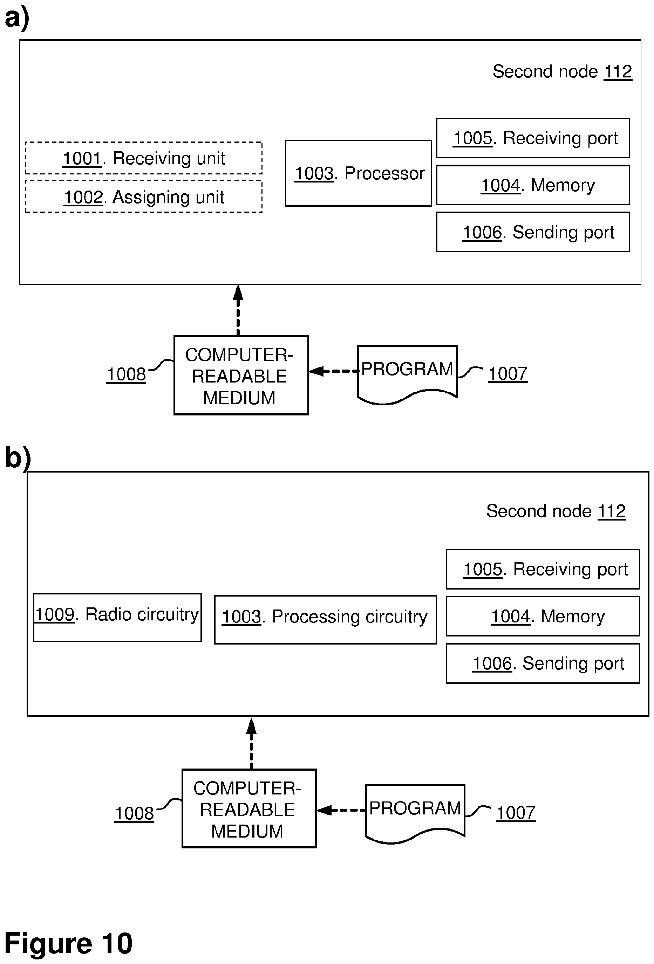

**Figure 10** depicts two different examples in panels a) and b), respectively, of the arrangement that the second node 112 may comprise to perform the method actions described above in relation to Figure 7. In some embodiments, the second node 112 may comprise the following arrangement depicted in **Figure 10a****.** The second node 112 is for handling the two or more ingress member flows 121, 122 configured to be split from the flow of packets. Each of the two or more ingress member flows 121, 122 being configured to comprise a plurality of packets. The second node 112 being configured to support the at least one elimination function 131, and the at least one replication function 132. The second node 112 being configured to operate in the communications network 100.

Several embodiments are comprised herein. Components from one embodiment may be tacitly assumed to be present in another embodiment and it will be obvious to a person skilled in the art how those components may be used in the other exemplary embodiments. The detailed description of some of the following corresponds to the same references provided above, in relation to the actions described for the second node 112, and will thus not be repeated here. For example, in some particular embodiments, the first node 111 may be the same as the second node 112.

In Figure 10, optional modules are indicated with dashed boxes.

The second node 112 is configured to, e.g. by means of a **receiving unit 1001** within the second node 112 configured to, receive the configuration from the first node 111 configured to operate in the communications network 100. The configuration is configured to configure the second node 112 to use the first indication for the first ingress member flow 121 to be input into the at least one elimination function 131. The first indication is configured to identify the first ingress member flow 121 as being comprised in the flow of packets. The indication is further configured to uniquely identify the first ingress member flow 121 from the at least one of: i) the second ingress member flow 122, of the two or more ingress member flows 121, 122, to be input into the at least one replication function 132, and ii) the any other ingress member flow, of the two or more ingress member flows 121, 122, to be input into the second node 112.

In some embodiments, the configuration may be further configured to configure the second node 112 to use the second indication for the second ingress member flow 122 to be input into the at least one replication function 132. The second indication may be configured to identify the second ingress member flow 122 as being comprised in the flow of packets. The second indication may be further configured to uniquely identify the second ingress member flow 122 from at least one of: i) the first ingress member flow 121, of the two or more ingress member flows 121, 122, to be input into the at least one elimination function 131, and ii) any other ingress member flow, of the two or more ingress member flows 121, 122, to be input into the second node 112.

In some embodiments, the at least one elimination function 131 may be configured to comprise the first elimination function 131 having the first ingress member flow 121 as input, and the at least one replication function 132 may be configured to comprise the first replication function 132. In some of such embodiments, the configuration may further configure the first replication function 132 to use the first indication to identify the member flow 123 to be output from the first replication function 132 and input into the first elimination function 131.

The second node 112 is further configured to, e.g. by means of an **assigning unit 1002** within the second node 112 configured to, assign the first indication to the first ingress member flow 121 to be input into the at least one elimination function 131.

In some embodiments, to assign may be further configured to comprise assigning the second indication to the second ingress member flow 122 to be input into the at least one replication function 132.

In some embodiments, any of the first indication and the second indication may be configured to be a label.

In some embodiments, the label may be configured to be an Ingress Service label (S-label).

In some embodiments, the second node 112 may be further configured to, e.g. by means of the receiving unit 1001 within the second node 112 configured to, receive at least one of: i) at the first function 131, the first ingress member flow 121 as input, as identified by the first indication, and ii) at the second function 132, the second ingress member flow 122 as input, as identified by the second indication.

In some embodiments, the first node 111 may be configured to be the same as the second node 112.

In some embodiments, the second node 112 may be configured to support multi-stage Packet Replication, Elimination, and Ordering Functions (PREOF).

In some embodiments, the first node 111 may be configured to manage a DetNet Service Label allocation Entity.

In some embodiments, the second node 112 may be configured to support Multi Protocol Label Switching (MPLS).

In some embodiments, the communications network 100 may be configured to be a Deterministic Network (DetNet).

The embodiments herein may be implemented through one or more processors, such as a **processor 1003** in the second node 112 depicted in Figure 10, together with computer program code for performing the functions and actions of the embodiments herein. The program code mentioned above may also be provided as a computer program product, for instance in the form of a data carrier carrying computer program code for performing the embodiments herein when being loaded into the in the second node 112. One such carrier may be in the form of a CD ROM disc. It is however feasible with other data carriers such as a memory stick. The computer program code may furthermore be provided as pure program code on a server and downloaded to the second node 112.

The second node 112 may further comprise a **memory 1004** comprising one or more memory units. The memory 1004 is arranged to be used to store obtained information, store data, configurations, schedulings, and applications etc. to perform the methods herein when being executed in the second node 112.

In some embodiments, the second node 112 may receive information from, e.g., the first node 111, and/or any of the other nodes in the communications network 100, through a **receiving port 1005.** In some examples, the receiving port 1005 may be, for example, connected to one or more antennas in second node 112. In other embodiments, the second node 112 may receive information from another structure in the communications network 100 through the receiving port 1005. Since the receiving port 1005 may be in communication with the processor 1003, the receiving port 1005 may then send the received information to the processor 1003. The receiving port 1005 may also be configured to receive other information.

The processor 1003 in the second node 112 may be further configured to transmit or send information to e.g., the first node 111, and/or any of the other nodes in the communications network 100, through a **sending port 1006,** which may be in communication with the processor 1003, and the memory 1004.

Those skilled in the art will also appreciate that the units 1001-1002 described above may refer to a combination of analog and digital circuits, and/or one or more processors configured with software and/or firmware, e.g., stored in memory, that, when executed by the one or more processors such as the processor 1003, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Those skilled in the art will also appreciate that any the units 1001-1002 described above may be the processor 1003 of the second node 112, or an application running on such processor 1003.

Thus, the methods according to the embodiments described herein for the second node 112 may be respectively implemented by means of a **computer program 1007** product, comprising instructions, i.e., software code portions, which, when executed on at least one processor 1003, cause the at least one processor 1003 to carry out the actions described herein, as performed by the second node 112. The computer program 1007 product may be stored on a **computer-readable storage medium 1008.** The computer-readable storage medium 1008, having stored thereon the computer program 1007, may comprise instructions which, when executed on at least one processor 1003, cause the at least one processor 1003 to carry out the actions described herein, as performed by the second node 112. In some embodiments, the computer-readable storage medium 1008 may be a non-transitory computer-readable storage medium, such as a CD ROM disc, a memory stick, or stored in the cloud space. In other embodiments, the computer program 1007 product may be stored on a carrier containing the computer program, wherein the carrier is one of an electronic signal, optical signal, radio signal, or the computer-readable storage medium 1008, as described above.

The second node 112 may comprise an interface unit to facilitate communications between the second node 112 and other nodes or devices, e.g., the first node 111. In some particular examples, the interface may, for example, include a transceiver configured to transmit and receive radio signals over an air interface in accordance with a suitable standard.

In other embodiments, the second node 112 may comprise the following arrangement depicted in **Figure 10b****.** The second node 112 may comprise a **processing circuitry 1003,** e.g., one or more processors such as the processor 1003, in the second node 112 and the memory 1004. The second node 112 may also comprise a **radio circuitry 1009,** which may comprise e.g., the receiving port 1005 and the sending port 1006. The processing circuitry 1003 may be configured to, or operable to, perform the method actions according to Figure 7, in a similar manner as that described in relation to Figure 10a. The radio circuitry 1009 may be configured to set up and maintain at least a wireless connection with the first node 111, and/or any of the other nodes in the communications network 100. Circuitry may be understood herein as a hardware component.

Hence, embodiments herein also relate to the second node 112 operative to handle the two or more ingress member flows 121, 122 configured to be split from a flow of packets. Each of the two or more ingress member flows 121, 122 are configured to comprise a plurality of packets. The second node 112 is configured to support the at least one elimination function 131, and the at least one replication function 132. The second node 112 is configured to operate in the communications network 100. The second node 112 may comprise the processing circuitry 1003 and the memory 1004, said memory 1004 containing instructions executable by said processing circuitry 1003, whereby the second node 112 is further operative to perform the actions described herein in relation to the second node 112, e.g., in Figure 7.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

As used herein, the expression "at least one of:" followed by a list of alternatives separated by commas, and wherein the last alternative is preceded by the "and" term, may be understood to mean that only one of the list of alternatives may apply, more than one of the list of alternatives may apply or all of the list of alternatives may apply. This expression may be understood to be equivalent to the expression "at least one of:" followed by a list of alternatives separated by commas, and wherein the last alternative is preceded by the "or" term.

When using the word "comprise" or "comprising", it shall be interpreted as non- limiting, i.e. meaning "consist at least of".

The embodiments herein are not limited to the above described preferred embodiments. Various alternatives, modifications and equivalents may be used. Therefore, the above embodiments should not be taken as limiting the scope of the invention.

As used herein, the expression "in some embodiments" has been used to indicate that the features of the embodiment described may be combined with any other embodiment or example disclosed herein.

As used herein, the expression "in some examples" has been used to indicate that the features of the example described may be combined with any other embodiment or example disclosed herein.

A processor, as used herein, may be understood to be a hardware component.

## Claims

1. A method performed by a first node (111), the method being for configuring a second node (112) to handle two or more ingress member flows (121, 122) split from a flow of packets, each of the two or more ingress member flows (121, 122) comprising a plurality of packets, wherein the configuring is to handle the two or more ingress member flows (121, 122) via at least one elimination function (131), and at least one replication function (132) supported by the second node (112), the first node (111) and the second node (112) operating in a communications network (100), the method comprising:
- *allocating* (601) a first indication to a first ingress member flow (121) to be input into the at least one elimination function (131), the first indication identifying the first ingress member flow (121) as being comprised in the flow of packets, and the first indication uniquely identifying the first ingress member flow (121) from at least one of:
i. a second ingress member flow (122), of the two or more ingress member flows (121, 122), to be input into the at least one replication function (132), and
ii. any other ingress member flow, of the two or more ingress member flows (121, 122), to be input into the second node (112), and
- *configuring* (602) the second node (112) to use the allocated first indication.

2. The method according to claim 1, wherein the at least one elimination function (131) comprises a first elimination function (131) having the first ingress member flow (121) as input, and the at least one replication function (132) comprises a first replication function (132), and wherein the configuring (602) further comprises configuring the first replication function (132) to use the first indication to identify a member flow (123) to be output from the first replication function (132) and input into the first elimination function (131).

3. The method according to any of claims 1-2, wherein:
- the allocating (601) further comprises allocating a second indication to the second ingress member flow (122) to be input into the at least one replication function (132), the second indication identifying the second ingress member flow (122) as being comprised in the flow of packets, and the second indication uniquely identifying the second ingress member flow (122) from at least one of:
i. the first ingress member flow (121), of the two or more ingress member flows (121, 122), to be input into the at least one elimination function (131), and
ii. any other ingress member flow, of the two or more ingress member flows (121, 122), to be input into the second node (112), and
- the configuring further comprises configuring the second node (112) to use the allocated second indication.

4. The method according to claim 3, wherein any of the first indication and the second indication is a label, and wherein the label is an Ingress Service label, S-label.

5. The method according to any of claims 1-4, wherein the first node (111) is the same as the second node (112), wherein the at least one elimination function (131) comprises a first elimination function (131), and the at least one replication function (132) comprises a first replication function (132), and wherein the method further comprises:
- *receiving* (603) at least one of:
i. at the first elimination function (131), the first ingress member flow (121) as input, as identified by the first indication, and
ii. at the first replication function (132), the second ingress member flow (122) as input, as identified by the second indication.

6. The method according to any of claims 1-5, wherein the first node (111) manages a DetNet Service Label allocation Entity, and wherein the communications network (100) is a Deterministic Network, DetNet

7. A method performed by a second node (112), the method being for handling two or more ingress member flows (121, 122) split from a flow of packets, each of the two or more ingress member flows (121, 122) comprising a plurality of packets, the second node (112) supporting at least one elimination function (131), and at least one replication function (132), the second node (112) operating in a communications network (100), the method comprising:
- *receiving* (701) a configuration from a first node (111) operating in the communications network (100), the configuration configuring the second node (112) to use a first indication for a first ingress member flow (121) to be input into the at least one elimination function (131), the first indication identifying the first ingress member flow (121) as being comprised in the flow of packets, and the indication uniquely identifying the first ingress member flow (121) from at least one of:
i. a second ingress member flow (122), of the two or more ingress member flows (121, 122), to be input into the at least one replication function (132), and
ii. any other ingress member flow, of the two or more ingress member flows (121, 122), to be input into the second node (112), and
- *assigning* (702) the first indication to the first ingress member flow (121) to be input into the at least one elimination function (131).

8. The method according to claim 7, wherein the at least one elimination function (131) comprises a first elimination function (131) having the first ingress member flow (121) as input, and the at least one replication function (132) comprises a first replication function (132), and wherein the configuration further configures the first replication function (132) to use the first indication to identify a member flow (123) to be output from the first replication function (132) and input into the first elimination function (131).

9. The method according to any of claims 7-8, wherein:
- the configuration further configures the second node (112) to use a second indication for the second ingress member flow (122) to be input into the at least one replication function (132), the second indication identifying the second ingress member flow (122) as being comprised in the flow of packets, and the second indication uniquely identifying the second ingress member flow (122) from at least one of:
i. the first ingress member flow (121), of the two or more ingress member flows (121, 122), to be input into the at least one elimination function (131), and
ii. any other ingress member flow, of the two or more ingress member flows (121, 122), to be input into the second node (112), and
- wherein the assigning (702) further comprises assigning the second indication to the second ingress member flow (122) to be input into the at least one replication function (132).

10. The method according to any of claims 7-9, wherein any of the first indication and the second indication is a label, and wherein the label is an Ingress Service label, S-label.

11. The method according to any of claims 7-10, further comprising:
- *receiving* (703) at least one of:
i. at the first function (131), the first ingress member flow (121) as input, as identified by the first indication, and
ii. at the second function (132), the second ingress member flow (122) as input, as identified by the second indication.

12. The method according to any of claims 7-11 wherein the second node (112) supports multi-stage Packet Replication, Elimination, and Ordering Functions, PREOF. and/or supports Multi Protocol Label Switching, MPLS.

13. The method according to any of claims 7-12, wherein the first node (111) manages a DetNet Service Label allocation Entity, and wherein the communications network is a Determinstic Network, DetNet

14. A first node (111), for configuring a second node (112) to handle two or more ingress member flows (121, 122) configured to be split from a flow of packets, each of the two or more ingress member flows (121, 122) being configured to comprise a plurality of packets, wherein the configuring is configured to be to handle the two or more ingress member flows (121, 122) via at least one elimination function (131), and at least one replication function (132) configured to be supported by the second node (112), the first node (111) and the second node (112) being configured to operate in a communications network (100), the first node (111) being further configured to:
- allocate a first indication to a first ingress member flow (121) to be input into the at least one elimination function (131), the first indication being configured to identify the first ingress member flow (121) as being comprised in the flow of packets, and the first indication being further configured to uniquely identify the first ingress member flow (121) from at least one of:
i. a second ingress member flow (122), of the two or more ingress member flows (121, 122), to be input into the at least one replication function (132), and
ii. any other ingress member flow, of the two or more ingress member flows (121, 122), to be input into the second node (112), and
- configure the second node (112) to use the allocated first indication.

15. A second node (112), for handling two or more ingress member flows (121, 122) configured to be split from a flow of packets, each of the two or more ingress member flows (121, 122) being configured to comprise a plurality of packets, the second node (112) being configured to support at least one elimination function (131), and at least one replication function (132), the second node (112) being configured to operate in a communications network (100), the second node (112) being further configured to:
- receive a configuration from a first node (111) configured to operate in the communications network (100), the configuration being configured to configure the second node (112) to use a first indication for a first ingress member flow (121) to be input into the at least one elimination function (131), the first indication being configured to identify the first ingress member flow (121) as being comprised in the flow of packets, and the indication being further configured to uniquely identify the first ingress member flow (121) from at least one of:
i. a second ingress member flow (122), of the two or more ingress member flows (121, 122), to be input into the at least one replication function (132), and
ii. any other ingress member flow, of the two or more ingress member flows (121, 122), to be input into the second node (112), and
- assign the first indication to the first ingress member flow (121) to be input into the at least one elimination function (131).

## Patentansprüche

1. Verfahren, das von einem ersten Knoten (111) durchgeführt wird, wobei das Verfahren zum Konfigurieren eines zweiten Knotens (112) vorgesehen ist, um zwei oder mehr Eingangselementströme (121, 122) zu händeln, die von einem Strom von Paketen abgeteilt sind, wobei jeder der zwei oder mehr Eingangselementströme (121, 122) eine Mehrzahl von Paketen umfasst, wobei das Konfigurieren zum Händeln der zwei oder mehr Eingangselementströme (121, 122) über zumindest eine Eliminierungsfunktion (131) und zumindest eine Replikationsfunktion (132) vorgesehen ist, die von dem zweiten Knoten (112) unterstützt werden, wobei der erste Knoten (111) und der zweite Knoten (112) in einem Datenübertragungsnetzwerk (100) arbeiten, wobei das Verfahren umfasst:
- *Zuordnen* (601) einer ersten Angabe zu einem ersten Eingangselementstrom (121) zur Eingabe in die zumindest eine Eliminierungsfunktion (131), wobei die erste Angabe den ersten Eingangselementstrom (121) als in dem Strom von Paketen umfasst identifiziert, und wobei die erste Angabe den ersten Eingangselementstrom (121) eindeutig aus zumindest einem identifiziert aus:
i. einem zweiten Eingangselementstrom (122) der zwei oder mehr Eingangselementströme (121, 122) zur Eingabe in die zumindest eine Replikationsfunktion (132), und
ii. einem beliebigen anderen Eingangselementstrom der zwei oder mehr Eingangselementströme (121, 122) zur Eingabe in den zweiten Knoten (112), und
- *Konfigurieren* (602) des zweiten Knotens (112) zur Verwendung der zugeordneten ersten Angabe.

2. Verfahren nach Anspruch 1, wobei die zumindest eine Eliminierungsfunktion (131) eine erste Eliminierungsfunktion (131) mit dem ersten Eingangselementstrom (121) als Eingabe umfasst und die zumindest eine Replikationsfunktion (132) eine erste Replikationsfunktion (132) umfasst, und wobei das Konfigurieren (602) ferner das Konfigurieren der ersten Replikationsfunktion (132) zur Verwendung der ersten Angabe bei der Identifizierung eines Elementstroms (123) umfasst, den es aus der ersten Replikationsfunktion (132) auszugeben und in die erste Eliminierungsfunktion (131) einzugeben gilt.

3. Verfahren nach einem der Ansprüche 1 bis 2, wobei:
- das Zuordnen (601) ferner das Zuordnen einer zweiten Angabe zu dem zweiten Eingangselementstrom (122) zur Eingabe in die zumindest eine Replikationsfunktion (132) umfasst, wobei die zweite Angabe den zweiten Eingangselementstrom (122) als in dem Strom von Paketen umfasst identifiziert, und wobei die zweite Angabe den zweiten Eingangselementstrom (122) eindeutig aus zumindest einem identifiziert aus:
i. dem ersten Eingangselementstrom (121) der zwei oder mehr Eingangselementströme (121, 122) zur Eingabe in die zumindest eine Eliminierungsfunktion (131), und
ii. einem beliebigen anderen Eingangselementstrom der zwei oder mehr Eingangselementströme (121, 122) zur Eingabe in den zweiten Knoten (112), und
- das Konfigurieren ferner das Konfigurieren des zweiten Knotens (112) zur Verwendung der zugeordneten zweiten Angabe umfasst.

4. Verfahren nach Anspruch 3, wobei eine beliebige der ersten Angabe und der zweiten Angabe ein Label ist, und wobei das Label ein Eingangsdienst-Label, S-Label, ist.

5. Verfahren nach einem der Ansprüche 1 bis 4, wobei der erste Knoten (111) der gleiche wie der zweite Knoten (112) ist, wobei die zumindest eine Eliminierungsfunktion (131) eine erste Eliminierungsfunktion (131) umfasst, und wobei die zumindest eine Replikationsfunktion (132) eine erste Replikationsfunktion (132) umfasst, und wobei das Verfahren ferner umfasst:
- *Empfangen* (603) zumindest eines von:
i. dem ersten Eingangselementstrom (121) als Eingabe an der ersten Eliminierungsfunktion (131), wie durch die erste Angabe identifiziert, und
ii. den zweiten Eingangselementstrom (122) als Eingabe an der ersten Replikationsfunktion (132), wie durch die zweite Angabe identifiziert.

6. Verfahren nach einem der Ansprüche 1 bis 5, wobei der erste Knoten (111) eine DetNet-Dienst-Label-Zuordnungsentität verwaltet, und wobei das Datenübertragungsnetzwerk (100) ein deterministisches Netzwerk, DetNet, ist

7. Verfahren, das von einem zweiten Knoten (112) durchgeführt wird, wobei das Verfahren zum Händeln von zwei oder mehr Eingangselementströmen (121, 122) vorgesehen ist, die von einem Strom von Paketen abgeteilt sind, wobei jeder der zwei oder mehr Eingangselementströme (121, 122) eine Mehrzahl von Paketen umfasst, wobei der zweite Knoten (112) zumindest eine Eliminierungsfunktion (131) und zumindest eine Replikationsfunktion (132) unterstützt, wobei der zweite Knoten (112) in einem Datenübertragungsnetzwerk (100) arbeitet, wobei das Verfahren umfasst:
- *Empfangen* (701) einer Konfiguration von einem ersten Knoten (111), der in dem Datenübertragungsnetzwerk (100) arbeitet, wobei die Konfiguration den zweiten Knoten (112) zur Verwendung einer ersten Angabe für einen ersten Eingangselementstrom (121) zur Eingabe in die zumindest eine Eliminierungsfunktion (131) konfiguriert, wobei die erste Angabe den ersten Eingangselementstrom (121) als in dem Strom von Paketen umfasst identifiziert, und wobei die Angabe den ersten Eingangselementstrom (121) eindeutig aus zumindest einem identifiziert aus:
i. einem zweiten Eingangselementstrom (122) der zwei oder mehr Eingangselementströme (121, 122) zur Eingabe in die zumindest eine Replikationsfunktion (132), und
ii. einem beliebigen anderen Eingangselementstrom der zwei oder mehr Eingangselementströme (121, 122) zur Eingabe in den zweiten Knoten (112), und
- *Zuweisen* (702) der ersten Angabe zu dem ersten Eingangselementstrom (121) zur Eingabe in die zumindest eine Eliminierungsfunktion (131).

8. Verfahren nach Anspruch 7, wobei die zumindest eine Eliminierungsfunktion (131) eine erste Eliminierungsfunktion (131) mit dem ersten Eingangselementstrom (121) als Eingabe umfasst und die zumindest eine Replikationsfunktion (132) eine erste Replikationsfunktion (132) umfasst, und wobei die Konfiguration ferner die erste Replikationsfunktion (132) zur Verwendung der ersten Angabe bei der Identifizierung eines Elementstroms (123) konfiguriert, den es aus der ersten Replikationsfunktion (132) auszugeben und in die erste Eliminierungsfunktion (131) einzugeben gilt.

9. Verfahren nach einem der Ansprüche 7 bis 8, wobei:
- die Konfiguration ferner den zweiten Knoten (112) zur Verwendung einer zweiten Angabe für den zweiten Eingangselementstrom (122) zur Eingabe in die zumindest eine Replikationsfunktion (132) konfiguriert, wobei die zweite Angabe den zweiten Eingangselementstrom (122) als in dem Strom von Paketen umfasst identifiziert, und wobei die zweite Angabe den zweiten Eingangselementstrom (122) eindeutig aus zumindest einem identifiziert aus:
i. dem ersten Eingangselementstrom (121) der zwei oder mehr Eingangselementströme (121, 122) zur Eingabe in die zumindest eine Eliminierungsfunktion (131), und
ii. einem beliebigen anderen Eingangselementstrom der zwei oder mehr Eingangselementströme (121, 122) zur Eingabe in den zweiten Knoten (112), und
- wobei das Zuweisen (702) ferner das Zuweisen der zweiten Angabe zu dem zweiten Eingangselementstrom (122) zur Eingabe in die zumindest eine Replikationsfunktion (132) umfasst.

10. Verfahren nach einem der Ansprüche 7 bis 9, wobei eine beliebige der ersten Angabe und der zweiten Angabe ein Label ist, und wobei das Label ein Eingangsdienst-Label, S-Label, ist.

11. Verfahren nach einem der Ansprüche 7 bis 10, das ferner umfasst:
- *Empfangen* (703) zumindest eines von:
i. dem ersten Eingangselementstrom (121) als Eingabe an der ersten Funktion (131), wie durch die erste Angabe identifiziert, und
ii. dem zweiten Eingangselementstrom (122) als Eingabe an der zweiten Funktion (132), wie durch die zweite Angabe identifiziert.

12. Verfahren nach einem der Ansprüche 7 bis 11, wobei der zweite Knoten (112) mehrstufige Packet Replication, Elimination and Ordering Functions, PREOF, unterstützt und/oder Multi Protocol Label Switching, MPLS, unterstützt.

13. Verfahren nach einem der Ansprüche 7 bis 12, wobei der erste Knoten (111) eine DetNet-Dienst-Label-Zuordnungsentität verwaltet, und wobei das Datenübertragungsnetzwerk (100) ein deterministisches Netzwerk, DetNet, ist

14. Erster Knoten (111) zum Konfigurieren eines zweiten Knotens (112), um zwei oder mehr Eingangselementströme (121, 122) zu händeln, die dazu konfiguriert sind, von einem Strom von Paketen abgeteilt zu werden, wobei jeder der zwei oder mehr Eingangselementströme (121, 122) dazu konfiguriert ist, eine Mehrzahl von Paketen zu umfassen, wobei das Konfigurieren dazu konfiguriert ist, die zwei oder mehr Eingangselementströme (121, 122) über zumindest eine Eliminierungsfunktion (131) und zumindest eine Replikationsfunktion (132) zu händeln, die dazu konfiguriert sind, durch den zweiten Knoten (112) unterstützt zu werden, wobei der erste Knoten (111) und der zweiten Knoten (112) dazu konfiguriert sind, in einem Datenübertragungsnetzwerk (100) zu arbeiten, wobei der erste Knoten (111) ferner konfiguriert ist zum:
- Zuordnen einer ersten Angabe zu einem ersten Eingangselementstrom (121) zur Eingabe in die zumindest eine Eliminierungsfunktion (131), wobei die erste Angabe dazu konfiguriert ist, den ersten Eingangselementstrom (121) als in dem Strom von Paketen umfasst zu identifizieren, und wobei die erste Angabe ferner dazu konfiguriert ist, den ersten Eingangselementstrom (121) eindeutig aus zumindest einem zu identifizieren aus:
i. einem zweiten Eingangselementstrom (122) der zwei oder mehr Eingangselementströme (121, 122) zur Eingabe in die zumindest eine Replikationsfunktion (132), und
ii. einem beliebigen anderen Eingangselementstrom der zwei oder mehr Eingangselementströme (121, 122) zur Eingabe in den zweiten Knoten (112), und
- Konfigurieren des zweiten Knotens (112) zur Verwendung der zugeordneten ersten Angabe.

15. Zweiter Knoten (112) zum Händeln von zwei oder mehr Eingangselementströmen (121, 122), die dazu konfiguriert sind, von einem Strom von Paketen abgeteilt zu werden, wobei jeder der zwei oder mehr Eingangselementströme (121, 122) dazu konfiguriert ist, eine Mehrzahl von Paketen zu umfassen, wobei der zweite Knoten (112) dazu konfiguriert ist, zumindest eine Eliminierungsfunktion (131) und zumindest eine Replikationsfunktion (132) zu unterstützen, wobei der zweite Knoten (112) dazu konfiguriert ist, in einem Datenübertragungsnetzwerk (100) zu arbeiten, wobei der zweite Knoten (112) ferner konfiguriert ist zum:
- Empfangen einer Konfiguration von einem ersten Knoten (111), der dazu konfiguriert ist, in dem Datenübertragungsnetzwerk (100) zu arbeiten, wobei die Konfiguration dazu konfiguriert ist, den zweiten Knoten (112) zur Verwendung einer ersten Angabe für einen ersten Eingangselementstrom (121) zur Eingabe in die zumindest eine Eliminierungsfunktion (131) zu konfigurieren, wobei die erste Angabe dazu konfiguriert ist, den ersten Eingangselementstrom (121) als in dem Strom von Paketen umfasst zu identifizieren, und wobei die Angabe ferner dazu konfiguriert ist, den ersten Eingangselementstrom (121) eindeutig aus zumindest einem zu identifizieren aus:
i. einem zweiten Eingangselementstrom (122) der zwei oder mehr Eingangselementströme (121, 122) zur Eingabe in die zumindest eine Replikationsfunktion (132), und
ii. einem beliebigen anderen Eingangselementstrom der zwei oder mehr Eingangselementströme (121, 122) zur Eingabe in den zweiten Knoten (112), und
- Zuweisen der ersten Angabe zu dem ersten Eingangselementstrom (121) zur Eingabe in die zumindest eine Eliminierungsfunktion (131).

## Revendications

1. Procédé exécuté par un premier noeud (111), le procédé étant destiné à configurer un second noeud (112) pour gérer deux flux d'éléments d'entrée (121, 122) ou plus, divisés à partir d'un flux de paquets, chacun des deux flux d'éléments d'entrée ou plus (121, 122) comprenant une pluralité de paquets, dans lequel la configuration est destinée à gérer les deux flux d'éléments d'entrée (121, 122) ou plus par l'intermédiaire d'au moins une fonction d'élimination (131) et d'au moins une fonction de réplication (132), prises en charge par le second noeud (112), le premier noeud (111) et le second noeud (112) fonctionnant dans un réseau de communication (100), le procédé comprenant :
- l'attribution (601) d'une première indication à un premier flux d'éléments d'entrée (121) à entrer dans l'au moins une fonction d'élimination (131), la première indication identifiant le premier flux d'éléments d'entrée (121) comme étant compris dans le flux de paquets, et la première indication identifiant de manière unique le premier flux d'éléments d'entrée (121) à partir d'au moins l'un :
i. d'un second flux d'éléments d'entrée (122), parmi les deux flux d'éléments d'entrée ou plus (121, 122), à entrer dans l'au moins une fonction de réplication (132), et
ii. de tout autre flux d'éléments d'entrée, parmi les deux flux d'éléments d'entrée (121, 122) ou plus, à entrer dans le second noeud (112), et
- la configuration (602) du second noeud (112) pour utiliser la première indication attribuée.

2. Procédé selon la revendication 1, dans lequel l'au moins une fonction d'élimination (131) comprend une première fonction d'élimination (131) présentant le premier flux d'éléments d'entrée (121) comme entrée, et l'au moins une fonction de réplication (132) comprend une première fonction de réplication (132), et dans lequel la configuration (602) comprend en outre la configuration de la première fonction de réplication (132) pour utiliser la première indication pour identifier un flux d'éléments (123) à sortir de la première fonction de réplication (132) et à entrer dans la première fonction d'élimination (131).

3. Procédé selon l'une quelconque des revendications 1 et 2, dans lequel :
- l'attribution (601) comprend en outre l'attribution d'une seconde indication au second flux d'éléments d'entrée (122) à entrer dans l'au moins une fonction de réplication (132), la seconde indication identifiant le second flux d'éléments d'entrée (122) comme étant compris dans le flux de paquets, et la seconde indication identifiant de manière unique le second flux d'éléments d'entrée (122) à partir d'au moins l'un :
i. du premier flux d'éléments d'entrée (121), parmi les deux flux d'éléments d'entrée ou plus (121, 122), à entrer dans l'au moins une fonction d'élimination (131), et
ii. de tout autre flux d'éléments d'entrée, parmi les deux flux d'éléments d'entrée (121, 122) ou plus, à entrer dans le second noeud (112), et
- la configuration comprend en outre la configuration du second noeud (112) pour utiliser la seconde indication attribuée.

4. Procédé selon la revendication 3, dans lequel l'une quelconque de la première indication et de la seconde indication est une étiquette, et dans lequel l'étiquette est une étiquette de service d'entrée, étiquette S.

5. Procédé selon l'une quelconque des revendications 1 à 4, dans lequel le premier noeud (111) est le même que le second noeud (112), dans lequel l'au moins une fonction d'élimination (131) comprend une première fonction d'élimination (131), et l'au moins une fonction de réplication (132) comprend une première fonction de réplication (132), et dans lequel le procédé comprend en outre :
- la réception (603) d'au moins l'un :
i. au niveau de la première fonction d'élimination (131), du premier flux d'éléments d'entrée (121) comme entrée, tel qu'identifié par la première indication, et
ii. au niveau de la première fonction de réplication (132), du second flux d'éléments d'entrée (122) comme entrée, tel qu'identifié par la seconde indication.

6. Procédé selon l'une quelconque des revendications 1 à 5, dans lequel le premier noeud (111) gère une entité d'attribution d'étiquette de service DetNet, et dans lequel le réseau de communication (100) est un réseau déterministe, DetNet.

7. Procédé exécuté par un second noeud (112), le procédé étant destiné à gérer deux flux d'éléments d'entrée (121, 122) ou plus, divisés à partir d'un flux de paquets, chacun des deux flux d'éléments d'entrée ou plus (121, 122) comprenant une pluralité de paquets, le second noeud (112) prenant en charge au moins une fonction d'élimination (131) et au moins une fonction de réplication (132), le second noeud (112) fonctionnant dans un réseau de communication (100), le procédé comprenant :
- la réception (701) d'une configuration en provenance d'un premier noeud (111) fonctionnant dans le réseau de communications (100), la configuration configurant le second noeud (112) pour utiliser une première indication pour un premier flux d'éléments d'entrée (121) à entrer dans l'au moins une fonction d'élimination (131), la première indication identifiant le premier flux d'éléments d'entrée (121) comme étant compris dans le flux de paquets, et l'indication identifiant de manière unique le premier flux d'éléments d'entrée (121) à partir d'au moins l'un :
i. d'un second flux d'éléments d'entrée (122), parmi les deux flux d'éléments d'entrée ou plus (121, 122), à entrer dans l'au moins une fonction de réplication (132), et
ii. de tout autre flux d'éléments d'entrée, parmi les deux flux d'éléments d'entrée (121, 122) ou plus, à entrer dans le second noeud (112), et
- l'affectation (702) de la première indication au premier flux d'éléments d'entrée (121) à entrer dans l'au moins une fonction d'élimination (131).

8. Procédé selon la revendication 7, dans lequel l'au moins une fonction d'élimination (131) comprend une première fonction d'élimination (131) présentant le premier flux d'éléments d'entrée (121) comme entrée, et l'au moins une fonction de réplication (132) comprend une première fonction de réplication (132), et dans lequel la configuration configure en outre la première fonction de réplication (132) pour utiliser la première indication pour identifier un flux d'éléments (123) à sortir de la première fonction de réplication (132) et à entrer dans la première fonction d'élimination (131).

9. Procédé selon l'une quelconque des revendications 7 et 8, dans lequel :
- la configuration configure en outre le second noeud (112) pour utiliser une seconde indication pour le second flux d'éléments d'entrée (122) à entrer dans l'au moins une fonction de réplication (132), la seconde indication identifiant le second flux d'éléments d'entrée (122) comme étant compris dans le flux de paquets, et la seconde indication identifiant de manière unique le second flux d'éléments d'entrée (122) à partir d'au moins l'un :
i. du premier flux d'éléments d'entrée (121), parmi les deux flux d'éléments d'entrée ou plus (121, 122), à entrer dans l'au moins une fonction d'élimination (131), et
ii. de tout autre flux d'éléments d'entrée, parmi les deux flux d'éléments d'entrée (121, 122) ou plus, à entrer dans le second noeud (112), et
- dans lequel l'affectation (702) comprend en outre l'affectation de la seconde indication au second flux d'éléments d'entrée (122) à entrer dans l'au moins une fonction de réplication (132).

10. Procédé selon l'une quelconque des revendications 7 à 9, dans lequel l'une quelconque de la première indication et de la seconde indication est une étiquette, et dans lequel l'étiquette est une étiquette de service d'entrée, étiquette S.

11. Procédé selon l'une quelconque des revendications 7 à 10, comprenant en outre :
- la réception (703) d'au moins l'un :
i. au niveau de la première fonction (131), du premier flux d'éléments d'entrée (121) comme entrée, tel qu'identifié par la première indication, et
ii. au niveau de la seconde fonction (132), du second flux d'éléments d'entrée (122) comme entrée, tel qu'identifié par la seconde indication.

12. Procédé selon l'une quelconque des revendications 7 à 11, dans lequel le second noeud (112) prend en charge les fonctions de réplication, d'élimination et de classement de paquets à plusieurs étages, PREOF, et/ou prend en charge la commutation d'étiquettes multiprotocoles, MPLS.

13. Procédé selon l'une quelconque des revendications 7 à 12, dans lequel le premier noeud (111) gère une entité d'attribution d'étiquette de service DetNet, et dans lequel le réseau de communication est un réseau déterministe, DetNet.

14. Premier noeud (111), destiné à configurer un second noeud (112) pour gérer deux flux d'éléments d'entrée (121, 122) ou plus, configurés pour être divisés à partir d'un flux de paquets, chacun des deux flux d'éléments d'entrée (121, 122) ou plus tant configurés pour comprendre une pluralité de paquets, dans lequel la configuration est configurée pour gérer les deux flux d'éléments d'entrée (121, 122) ou plus par l'intermédiaire d'au moins une fonction d'élimination (131) et d'au moins une fonction de réplication (132) configurées pour être prises en charge par le second noeud (112), le premier noeud (111) et le second noeud (112) étant configurés pour fonctionner dans un réseau de communication (100), le premier noeud étant en outre configuré pour :
- attribuer une première indication à un premier flux d'éléments d'entrée (121) à entrer dans l'au moins une fonction d'élimination (131), la première indication étant configurée pour identifier le premier flux d'éléments d'entrée (121) comme étant compris dans le flux de paquets, et la première indication étant en outre configurée pour identifier de manière unique le premier flux d'éléments d'entrée (121) à partir d'au moins l'un :
i. d'un second flux d'éléments d'entrée (122), parmi les deux flux d'éléments d'entrée ou plus (121, 122), à entrer dans l'au moins une fonction de réplication (132), et
ii. de tout autre flux d'éléments d'entrée, parmi les deux flux d'éléments d'entrée (121, 122) ou plus, à entrer dans le second noeud (112), et
- configurer le second noeud (112) pour utiliser la première indication attribuée.

15. Second noeud (112), destiné à gérer deux flux d'éléments d'entrée (121, 122) ou plus, configurés pour être divisés à partir d'un flux de paquets, chacun des deux flux d'éléments d'entrée ou plus (121, 122) étant configuré pour comprendre une pluralité de paquets, le second noeud (112) étant configuré pour prendre en charge au moins une fonction d'élimination (131) et au moins une fonction de réplication (132), le second noeud (112) étant configuré pour fonctionner dans un réseau de communication (100), le second noeud étant en outre configuré pour :
- recevoir une configuration en provenance d'un premier noeud (111) configuré pour fonctionner dans le réseau de communications (100), la configuration étant configurée pour configurer le second noeud (112) pour utiliser une première indication pour un premier flux d'éléments d'entrée (121) à entrer dans l'au moins une fonction d'élimination (131), la première indication étant configurée pour identifier le premier flux d'éléments d'entrée (121) comme étant compris dans le flux de paquets, et l'indication étant en outre configurée pour identifier de manière unique le premier flux d'éléments d'entrée (121) à partir d'au moins l'un :
i. d'un second flux d'éléments d'entrée (122), parmi les deux flux d'éléments d'entrée ou plus (121, 122), à entrer dans l'au moins une fonction de réplication (132), et
ii. de tout autre flux d'éléments d'entrée, parmi les deux flux d'éléments d'entrée (121, 122) ou plus, à entrer dans le second noeud (112), et
- affecter la première indication au premier flux d'éléments d'entrée (121) à entrer dans l'au moins une fonction d'élimination (131).
